(19) Europäisches Patentamt European Patent Office Office européen des brevets

(11) **EP 1 859 850 A1**

(12) **EUROPEAN PATENT APPLICATION**

(43) Date of publication:
**28.11.2007 Bulletin 2007/48**

(51) Int Cl.:
***B01D 53/38*** *(2006.01)*   ***B01J 21/06*** *(2006.01)*
***B01J 23/06*** *(2006.01)*   ***B01J 23/38*** *(2006.01)*
***B01J 35/00*** *(2006.01)*   ***B01J 37/02*** *(2006.01)*

(21) Application number: **07108604.5**

(22) Date of filing: **22.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **24.05.2006  CN 200610089842**
         **21.07.2006  US 490705**

(71) Applicant: **Globe Union Industrial Corp.**
    **Taichung (TW)**

(72) Inventors:
  • **Syh-Yuh, Cheng**
    **Chu-Tung Chen**
    **Hsinchu Hsieh (TW)**

  • **Chia-Hsin, Lin**
    **Chu-Tung Chen**
    **Hsinchu Hsieh (TW)**
  • **Yu-Chih, Lin**
    **Chu-Tung Chen**
    **Hsinchu Hsieh (TW)**

(74) Representative: **Hutter, Anton et al**
    **AdamsonJones**
    **BioCity Nottingham**
    **Pennyfoot Street**
    **GB-Nottingham NG1 1GF (GB)**

(54) **Metal-supported photocatalyst and method for preparing the same**

(57)     A metal-supporting photocatalyst includes a metal deposit and nano-particles of a photocatalyst dispersed on the metal deposit. Preferably, the metal deposit is a metal electro-deposit. More preferably, the metal deposit has a dendritic structure. A method for preparing a metal-supporting photocatalyst, including forming a metal deposit of a supporting metal, and forming nano-particles of a photocatalyst on the metal deposit, is also disclosed.

FIG. 1(a)

● :photocatalyst

EP 1 859 850 A1

**Description**

**BACKGROUND OF THE INVENTION**

**1. Field of the Invention**

This invention relates to a metal-supporting photocatalyst, more particularly to a metal-supporting photocatalyst including a metal deposit. This invention also relates to a method for preparing a metal-supporting photocatalyst including a metal deposit.

**2. Description of the Related Art**

Photocatalysts are characterized by their ability to generate free electrons and holes on the surface thereof when irradiated by light, such as ultraviolet light. These free electrons and holes on the surface of the photocatalyst can react with oxygen in the air and water molecules adhering to the surface to form active free radicals, such as super-oxide anions ($O_2^-$) andhydroxyl radicals (OH.). These active free radicals are capable of decomposing organic matter through redox reaction. Current methods for preparing the photocatalyst include: sol-gel process (U. S. Patent No. 5, 840, 111) ; hydrothermal process (U.S. Patent No. 5, 776, 239) ; vaporization and thermal quenching process (U.S. Patent No. 5,851,507); flame-heating process (U. S. Patent No. 5,672,330); chemical vapor deposition (CVD) process (U. S. PatentNo. 6, 027, 766) ; microemulsionprocess (U.S. Patent No. 5,879,715); plasma arc process (U.S. Patent No. 5,460, 701); pulsed laser pyrolysis process (U.S. Patent No. 6,387,531); mechanical ball-milling process (U.S. Patent No. 6,503,475), etc..

For the $TiO_2$-based photocatalyst, it has been found that the free electrons and holes in the photocatalyst can recombine quickly, thereby resulting in a decrease in the photocatalytic efficiency of the $TiO_2$-based photocatalyst. In order to improve the photocatalytic efficiency of the $TiO_2$-based photocatalyst, it has been proposed to fix metal or metal oxide particles, which serve as an electron trapper or to change electron transfer route, onto the surface of the $TiO_2$-based photocatalyst so as to lower probability of recombining the free electrons and holes. Current methods for preparing a metal or metal oxide particles-fixed photocatalyst include photo-reduction process (U.S. Patent No. 6, 368, 668), and surface-fixation on solid-sintered or potential energy-joined photocatalyst particles (U.S. Patent No. 6,294,246) . The metal or metal oxide particles fixed onto the surface of the $TiO_2$-based photocatalyst include: antibacterial metal or metal oxide, e.g., copper (Cu), silver (Ag), platinum (Pt), cobalt (Co), iron (Fe), nickel (Ni), cuprous oxide ($Cu_2O$), silver oxide ($Ag_2O$), gold (Au), zinc (Zn), chromium (Cr), manganese (Mn), and molybdenum (Mo); redox activity-enhancing metal or metal oxide, e.g., platinum (Pt), palladium (Pd), ruthenium (Ru), rhodium (Rh), iridium (Ir), osmium (Os), and oxides thereof; and hydrophilicity-enhancing metal oxide, e.g., oxides of silicon (Si), aluminum (Al), potassium (K), lithium (Li), sodium (Na), cesium (Cs), rubidium (Ru), and francium (Fr) . The metal or metal oxide particles-fixed photocatalyst thus formed has a nano-scaled or submicron-scaled sphere structure. The metal or metal oxide particles-fixed photocatalyst thus formedmaybe further supported on other carriers, such as zinc sulfide (ZnS, Japanese Patent No. JP2005120117), silicon dioxide (Taiwanese Patent No. 592824B), or zeolite (Taiwanese Patent No. 574074B).

When the metal or metal oxide particles-fixed photocatalyst thus formed is to be applied to antibacterial articles, the photocatalyst may be adhered to a base by heating or sintering with a binder layer. The binder layer is made of glaze, inorganic glass, thermoplastic resin, solder, fluoro-polymer, etc., with or without water or organic solvent (U.S. Patent No. 6,294,246 and Taiwanese Patent No. 279175B). Additionally, U.S. Patent No. 6,368,668 discloses fixation of the photocatalyst onto the base through rapid heating in heating means having a heating value per unit area of not less than 120 MJ/m$^2$h, at a temperature of about 1000°C.

However, the conventional methods for preparing a metal or metal oxide particles-fixed photocatalyst often encounter several problems as follows:

1. Aggregation of the photocatalyst: When the metal or metal oxide particles-fixed photocatalyst is sprayed on other carriers or bases, the photocatalyst tends to aggregate thereon and causes secondary pollution due to difficulty in separating from the carriers or bases.

2. Use of binders: Most of the conventional methods require various binders for fixing the metal or metal oxide particles-fixed photocatalyst onto the carrier or base. However, the photocatalyst, such as $TiO_2$-based photocatalyst, tends to decompose or degrade the binders, thereby resulting in peeling of the metal or metal oxide particles-fixed photocatalyst from the carrier or base.

3. Fixation with heating or sintering: When the metal or metal oxide particles-fixed photocatalyst is fixed onto the carrier or base through rapid-heating or sintering, the photocatalyst tends to undergo phase transformation, which results in reduction in catalytic activity of the photocatalyst.

4. Photo-activation of the photocatalyst: Activation of the photocatalyst requires exposure to a light of specific wavelength range. Thus, indoor application of the photocatalyst is very restricted.

## SUMMARY OF THE INVENTION

Therefore, the object of the present invention is to provide a metal-supporting photocatalyst and a method for preparing the same so as to eliminate at least one of the aforesaid drawbacks of the prior art.

According to one aspect of this invention, there is provided a metal-supporting photocatalyst that includes a metal deposit, and nano-particles of a photocatalyst dispersed on the metal deposit.

According to another aspect of this invention, there isprovided a metal-supporting photocatalystthatincludes a metal electro-deposit, and nano-particles of a photocatalyst dispersed on the metal electro-deposit.

According to still another aspect of this invention, there is provided a method for preparing a metal-supporting photocatalyst. The method includes forming a metal deposit of a supporting metal, and forming nano-particles of a photocatalyst on the metal deposit.

## BRIEF DESCRIPTION OF THE DRAWINGS

Other features and advantages of the present invention will become apparent in the following detailed description of the preferred embodiments of this invention, with reference to the accompanying drawings, in which:

Figs. 1(a) and 1(b) illustrate the structure of the preferred embodiment of a metal-supporting photocatalyst according to this invention;

Fig. 2 is a plot to illustrate different nano-structures of the deposit of the preferred embodiment that were formed under different silver nitrate concentrations and pH values of the aqueous solution used for forming the deposit;

Figs. 3(a) to 3(d) are scanning electron microscopy photographs to illustrate the relationship between the dispersion of nano-particles of titanium dioxide and the pH value of the aqueous solution containing silver deposit;

Fig. 4 is a plot to illustrate the relationship between the absorption strength and wavelength of different compositions of the metal-supporting photocatalysts and a metal deposit of this invention; and

Fig. 5 is a plot to illustrate the decomposition efficiency of methyleneblue by different compositions of the metal-supporting photocatalysts and a metal deposit of this invention.

## DETAILED DESCRIPTION OF THE PREFERRED EMBODIMENTS

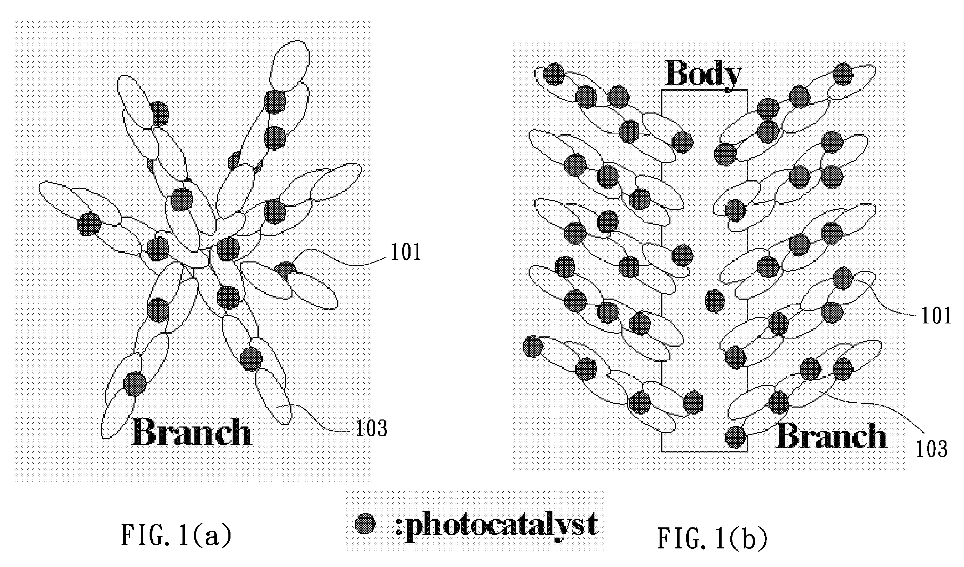

The metal-supporting photocatalyst according to this invention includes a metal deposit, and nano-particles of a photocatalyst dispersed on the metal deposit. The term "metal deposit" described hereinafter is a metallic material formed through a deposition process. In one preferred embodiment, the metal deposit is a metal electro-deposit, i.e., a deposit formed through an electrolytic process. More preferably, the metal deposit has a dendritic structure. Referring to Fig. 1(a), the dendritic structure of the metal deposit has branches 103, and the nano-particles 101 of the photocatalyst are dispersed on each of the branches 103. The branches 103 may include nano-scaled branches, submicron-scaled branches, or combinations thereof. Preferably, each of the branches 103 has a size ranging from 0.01 $\mu$m to 1 $\mu$m.

In addition, the branches 103 of the metal deposit may be made from one of a noble metal selected from the group consisting of gold (Au), silver (Ag), platinum (Pt), and palladium (Pd), and a transition metal selected from the group consisting of manganese (Mn), iron (Fe), cobalt (Co), nickel (Ni), copper (Cu) and zinc (Zn) . Preferably, each of the branches 103 is made from an antibacterial metal selected from the group consisting of zinc (Zn), silver (Ag), and copper (Cu).

The nano-particles 101 of the photocatalyst are made from a photo-catalytical compound selected from the group consisting of titanium dioxide and zinc oxide. Preferably, more than 50% of the nano-particles of the photocatalyst are made from anatase titanium dioxide. Most preferably, more than 80% of the nano-particles of the photocatalyst are made from anatase titanium dioxide. Additionally, the nano-particles of the photocatalyst preferably have a size ranging from 5 nm to 100 nm. More preferably, the nano-particles of the photocatalyst have a size ranging from 5 nm to 20 nm.

According to this invention, when the branches 103 are made from an antibacterial metal selected from the group mentioned above,the metal-supporting photocatalyst of this invention is capable of performing antibacterial and environment-cleaning activities by the photocatalytic property of the nano-particles 101 of the photocatalyst in the presence of light irradiation, or by the antibacterial nature of the metal deposit in the absence of light irradiation.

In addition, it is known that the larger the specific surface area, the easier the photocatalyst could be coated on a carrier or base. Since the metal deposit of the metal-supporting photocatalyst according to this invention has a dendritic structure, which exhibits a relatively high specific surface area, e.g., more than 1.27 $m^2$/g, the metal-supporting photocatalyst according to this invention can be directly coated or fixed on the carrier or base without the use of binders.

Referring to Fig. 1(b), in an alternative arrangement, the dendritic structure of the metal deposit further includes a main body 105, from which the branches 103 extend. Preferably, the main body 105 has a shape including but not limited to rod, sphere and sheet, and a size ranging from 0.1 $\mu$m to 10 $\mu$m. In Fig. 1(b), the main body 105 of rod shape is illustrated.

The preferred embodiment of a method for preparing a metal-supporting photocatalyst according to this invention includes forming a metal deposit of a supporting metal, and forming nano-particles of a photocatalyst on the metal deposit. Preferably, the metal deposit thus formed has a dendritic structure. Preferably, formation of the metal deposit is conducted by electrolysis of a metal salt of the supporting metal through redox reaction in a low temperature solution or redox reaction aided with pulsed discharge plasma. Specifically, the metal deposit of a supporting metal is made by placing a metal electrode, which has an oxidation potential higher than that of the supporting metal, in an aqueous solution containing the metal salt of the supporting metal with application of pulsed discharge plasma so as to form the metal deposit of the supporting metal on the surface of the metal electrode.

Preferably, the supporting metal is selected from the group consisting of a noble metal selected from the group consisting of gold (Au), silver (Ag), platinum (Pt), and palladium (Pd), and a transition metal selected from the group consisting of manganese (Mn), iron (Fe), cobalt (Co), nickel (Ni), copper (Cu) and zinc (Zn). The metal salt is selected from the group consisting of nitrate, acetate, oxalate, carbonate, and sulfate of the supporting metal. More preferably, the supporting metal is an antibacterial metal selected from the group consisting of zinc (Zn), silver (Ag), and copper (Cu), and the metal salt is selected from the group consisting of nitrate, acetate, oxalate, carbonate, and sulfate of zinc (Zn), silver (Ag), or copper (Cu) . Most preferably, the metal salt is silver nitrate.

In addition, the metal salt concentration of the aqueous solution, and temperature and pH value of the aqueous solution can be varied to achieve a desired structure of the metal deposit thus made, especially formation of the metal deposit having the dendritic structure. For example, the specific surface area will be decreased with the increase in pH value of the aqueous solution. Preferably, the aqueous solution contains nitric acid and ammonia, and has a pH value ranging from 2 to 4. Preferably, the metal salt concentration of the aqueous solution ranges from 1 wt% to 3 wt% based on the total weight of the aqueous solution.

The nano-particles of the photocatalyst may be dispersed on the metal deposit through dip-coating process or sol-gel process. Preferably, the dispersion of the nano-particles of the photocatalyst on the metal deposit can be controlled through pH adjustment of the aqueous solution in which the metal deposit is formed, and the concentration of the nano-particles of the photocatalyst in the aqueous solution. Preferably, the dispersion of the nano-particles of the photocatalyst on the metal deposit is conducted in the aqueous solution having pH value ranging from 11 to 12.

## Example

1. Preparation of a metal deposit having a dendritic structure

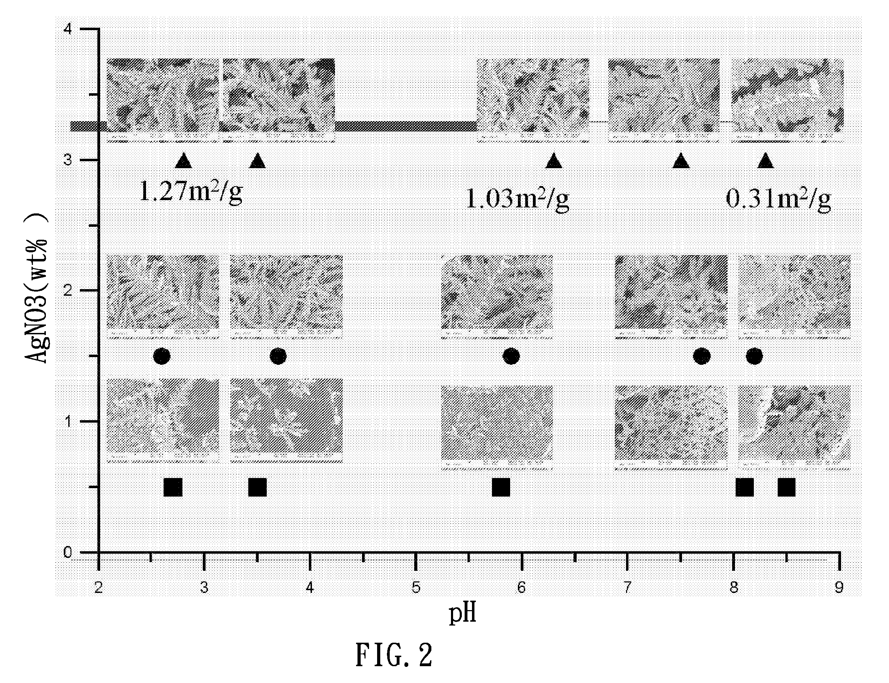

Aqueous solutions of 1 wt%, 2 wt%, and 3 wt% of silver nitrate ($AgNO_3$) (available from Mallinckrodt Co., tradename:MA-2169-01, CAS No. : 7761-88-8) were prepared. Then, copper (Cu) (available from J. T. BakerCo., tradename: JT-1728-01, CAS No. : 7440-50-8) was added in a molar ratio of $AgNO_3$ to Cu equated to 2:1 into each of the aqueous solutions, i.e., 0.19 wt%, 0.38 wt% and 0.57 wt% of Cu were separately added into the solutions of 1 wt%, 2 wt%, and 3 wt% of silver nitrate ($AgNO_3$) . Next, nitric acid (available from J. T. Baker, tradename: JT-9601-01, CAS No.: 7697-37-2) and ammonia solution (available from TEDIA, tradename: AR-0147, CAS No.: 1336-21-6) were added into the aqueous solution in an amount sufficient to adjust the pH value of the aqueous solution to a range of from 3 to 9. Silver deposit was formed in each of the aqueous solutions due to oxidation potential difference between silver and copper. The specific surface area (BET surface) of the silver deposit respectively formed in the aqueous solutions of 1 wt%, 2 wt%, and 3 wt% of silver nitrate is shown in Fig. 2. From the results shown in Fig. 2, the completion level of the dendritic structure of the silver deposit increases with an increase in the silver nitrate concentration of the aqueous solution. The specific surface area of the silver deposit increases with an increase in the silver nitrate concentration of the aqueous solution and increases with a decrease in pH value of the aqueous solution. More specifically, when the silver deposit is formed in the aqueous solution of 3 wt% of silver nitrate within pH range of 2 to 4 (acidic condition), the silver deposit has a specific surface area of 1.27 $m^2/g$. However, when the pH value is increased to 8.5 above (basic condition), the specific surface area of the silver deposit is diminished by 76%.

2. Dispersion of nano-particles of photocatalyst on the silver deposit

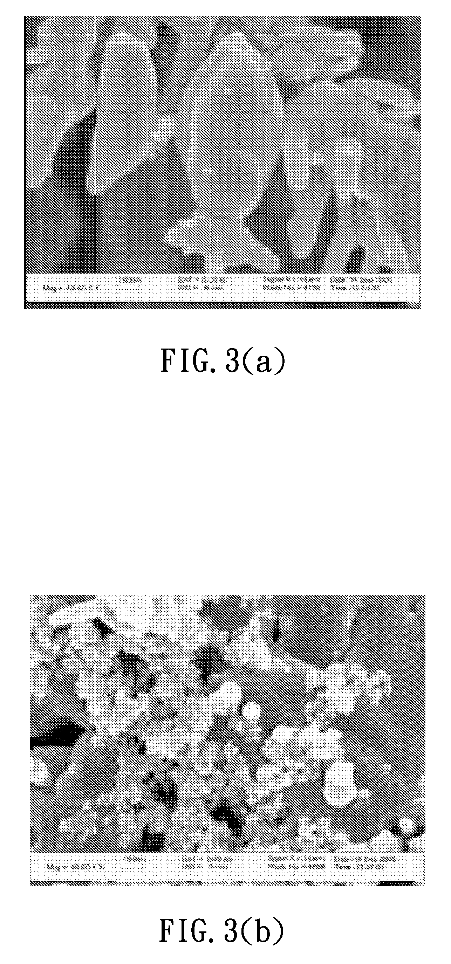

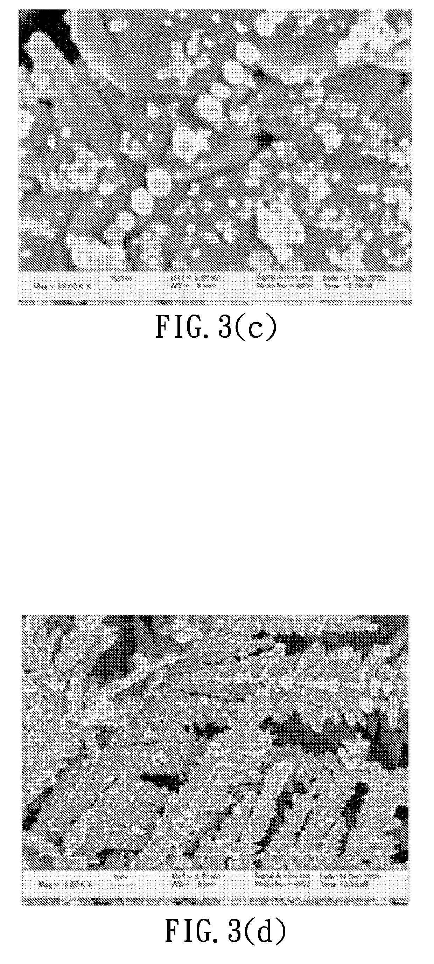

Nano-particles of titanium dioxide (available from Ishihara Sangyo Kaisha LTD., tradename: STS 21), in an amount of 1 wt%, 3 wt%, and 5 wt%, were separately added to the silver deposit formed in the aqueous solution of 3 wt% silver nitrate as mentioned above. Next, nitric acid (available from J. T. Baker, tradename: JT-9601-01, CAS No.: 7697-37-2) and ammonia solution (available from TEDIA, tradename: AR-0147, CAS No.:1336-21-6) were added into the separate aqueous solutions so as to adjust the pH value to a range of from 3 to 12. The nano-particles of the titanium dioxide were dispersed on and were adhered to the silver deposit due to surface electrical difference therebetween. The metal-supporting photocatalysts with nano-particles of 1 wt%, 3 wt%, and 5 wt% of the titanium dioxide respectively dispersed on the silver deposit were made. It is noted that the amount of nano-particles of the titanium dioxide should not exceed 5 wt% so as to prevent aggregation of the titanium dioxide particles on the silver deposit. The dispersion effect of the nano-particles of 5 wt% of titanium dioxide on the silver deposit for the aqueous solutions respectively having pH values of 4.5, 7.5, and 11 are shown in Figs. 3(a) to Figs. 3(c). Fig. 3(d) is a reduced view of Fig. 3 (c) . As seen from the photographs of Figs. 3 (a) to 3 (c), the pH value of the aqueous solution varies the dispersion of the nano-particles of titanium dioxide on the silver deposit and results in different morphologies of the metal-supporting photocatalyst (silver-supporting TiO$_2$) thus formed. It is noted that the nano-particles of the titanium dioxide were dispersed with difficulty on the silver deposit at pH 6 (acidic condition). When the pH value increases to a neutral condition, the nano-particles of the titanium dioxide aggregated on the silver deposit. However, when pH value increases to a basic condition, especially pH 11 to 12, the nano-particles of the titanium dioxide were evenly dispersed on the silver deposit.

3. Photocatalytic effect of the metal-supporting photocatalyst of this invention

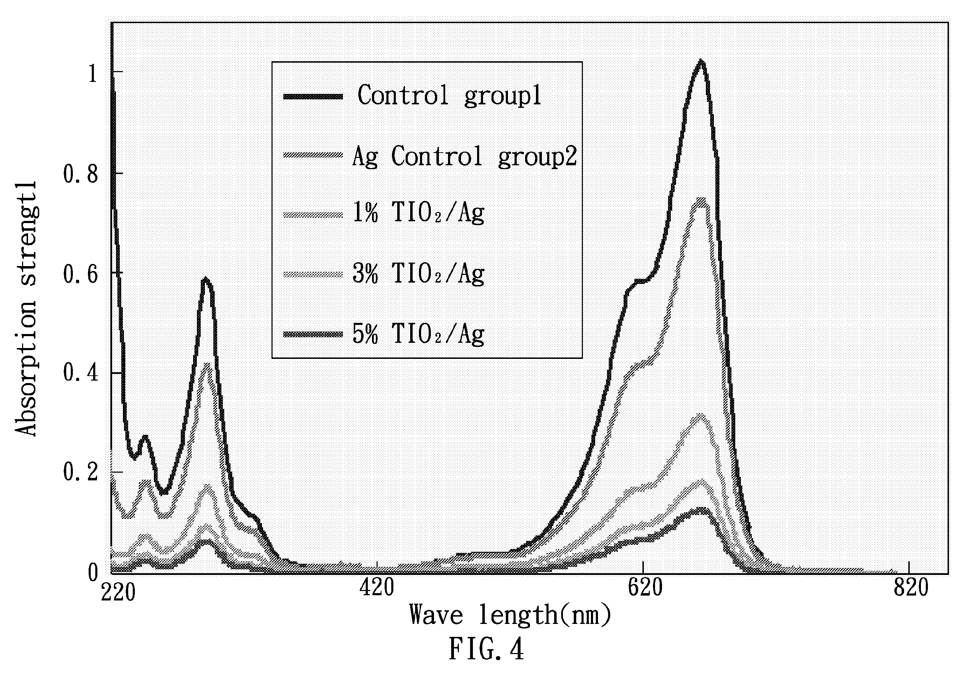

Each of the silver-supporting titanium dioxide photocatalysts obtained above, with nano-particles of 1 wt%, 3 wt%, and 5 wt% of the titanium dioxide dispersed on the silver deposit, were separately added into 100 ml of 0.01 wt% of methyleneblue solution in an amount of 1.5 g so as to form a test mixture. In addition, 100 ml of 0.01 wt% of methyleneblue solution without addition of the metal-supporting photocatalysts, and a mixture of 100 ml of 0.01 wt% of methyleneblue solution and the silver deposit were used as control groups 1 and 2. Each of the test mixtures and the control group 2 were irradiated with ultraviolet light having a wavelength of 235 nm for 20 minutes. The absorption strength under light wavelength ranging from 220 nm to 820 nm for each irradiated test mixture and control group 2, and the non-irradiated control group 1 is shown in Fig. 4. The absorption peak that corresponds to methyleneblue occurs around 670 nm. Decomposition efficiency of methyleneblue by the silver-supporting titanium dioxide for each irradiated test mixture and the control group 2 was calculated by the formula:

$$(A - A') / A \times 100\%,$$

where A stands for the integral area of the absorption peak of the curve for the origin (i.e., the control group 1) in Fig. 4 from 420 nm to 720 nm wavelength; and A' stands for the integral area of the absorption peak of each of the curves for the 1 wt%, 3 wt%, 5 wt% titanium dioxide test mixtures, and the control group 2 in Fig. 4 from 420 nm to 720 nm wavelength.

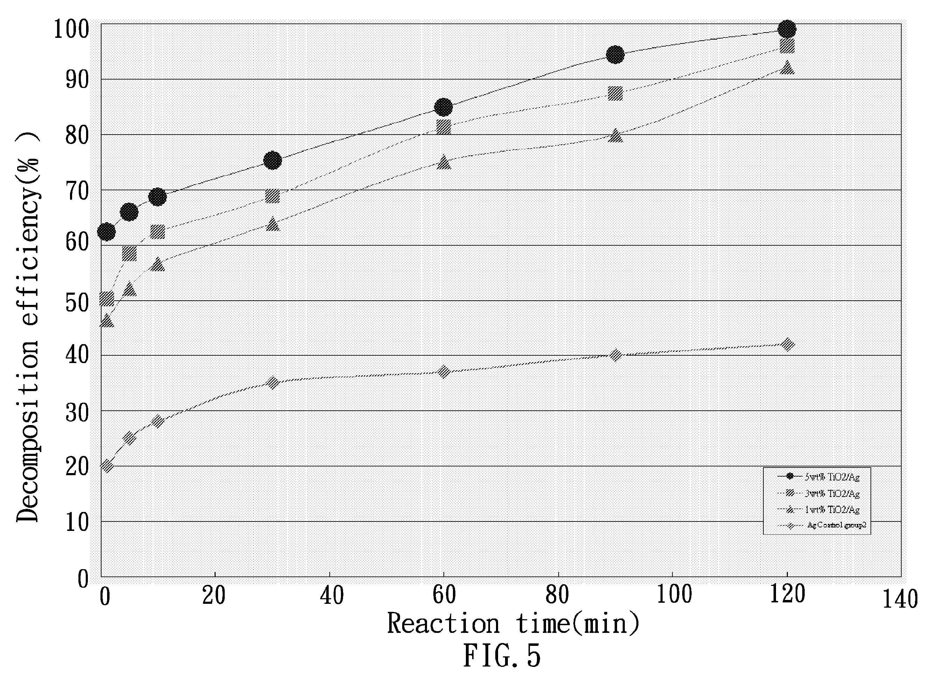

The decomposition efficiency results of each of the test mixtures and the control group 2 are shown in Fig. 5. As indicated in Fig. 5, after irradiating with ultraviolet light for 20 minutes, the decomposition efficiency of the control group 2 is 30%, and the decomposition efficiencies of the silver-supporting titanium dioxide photocatalysts with 1 wt%, 3 wt%, and 5 wt% of titanium dioxide are about 61%, 65%, and 72%, respectively. Apparently, decomposition efficiency of methyleneblue by the silver-supporting titanium dioxide photocatalyst increases with an increase in the amount of the titanium dioxide included in the silver-supporting titanium dioxide photocatalyst, and increases with an increase in reaction time. All the text mixtures can achieve 99% decomposition efficiency within 2 hours. Especially, the decomposition efficiency of the silver-supporting titanium dioxide with 5 wt% of titanium dioxide is almost 100%.

4. Evaluation of bactericidal effect of the metal-supporting photocatalyst of this invention

Bactericidal effect of the metal-supporting photocatalyst of this invention against bacteria including *Staphylococcus aureus, Escherichia coli, Pseudomonas aeruginosa,* Methicillin resistant *Staphylococcus aureus,* and *Escherichia coli* 0157 was evaluated in accordance with Japan JISZ 2801:2000 standard. The results are shown in the following Table I.

Table I

| Species of bacteria | Bactericidal effect with UV irradiation | Bactericidal effect without UV irradiation |
|---|---|---|
| *Staphylococcus aureus* | 99% | 99% |
| *Escherichia coli* | 99% | 99% |
| *Pseudomonas aeruginosa* | 99% | 99% |

(continued)

| Species of bacteria | Bactericidal effect with UV irradiation | Bactericidal effect without UV irradiation |
|---|---|---|
| Methicillin resistant *Staphylococcus aureus* | 99% | 99% |
| *Escherichia coli* 0157 | 99% | 99% |

According to this invention, since the metal-supporting photocatalyst includes nano-particles of the photocatalyst evenly dispersed on a metal deposit, particularly a metal deposit with a dendritic structure, aggregation of the photocatalyst on the metal deposit can be avoided, and the photocatalytic activity of the nano-particles of the photocatalyst can be considerably enhanced.

In addition, since dispersion of the nano-particles of the photocatalyst on a metal deposit is achieved through surface electrical difference therebetween, addition of the binder or the anion or cation surfactants for fixing the photocatalyst particles to a carrier is unnecessary. Hence, the method of preparing the metal-supporting photocatalyst of this invention is relatively simple and cost effective.

Moreover, since the metal deposit included in the metal-supporting photocatalsyt according to this invention has a relatively low melting point, the metal-supporting photocatalsyt can be fixed to carriers or bases in a relatively low temperature environment, and phase transformation of the photocatalyst or the metal deposit due to thermal effect can be avoided.

Additionally, when the metal deposit is made from an antibacterial metal, the metal-supporting photocatalyst is capable of performing antibacterial and environment-cleaning activities in either a bright or dark environment.

While the present invention has been described in connection with what is considered the most practical and preferred embodiments, it is understood that this invention is not limited to the disclosed embodiments but is intended to cover various arrangements included within the spirit and scope of the broadest interpretation and equivalent arrangements.

**Claims**

1. A metal-supporting photocatalyst comprising:

   a metal deposit; and
   nano-particles of a photocatalyst dispersed on said metal deposit.

2. The metal-supporting photocatalystofclaiml,wherein said metal deposit has a dendritic structure.

3. The metal-supporting photocatalystofclaim2,wherein said dendritic structure of said metal deposit has branches having a size ranging from 0.01 $\mu$m to 1 $\mu$m.

4. The metal-supportingphotocatalyst of claim 3, wherein said dendritic structure of said metal deposit further includes a main body, from which said branches extend, said main body having a size ranging from 0.1 $\mu$m to 10 $\mu$m.

5. A metal-supporting photocatalyst comprising:

   a metal electro-deposit; and
   nano-particles of a photocatalyst dispersed on said metal electro-deposit.

6. The metal-supporting photocatalystofclaim5,wherein said metal electro-deposit has a dendritic structure.

7. The metal-supporting photocatalyst of claim 6, wherein said dendriticstructureof said metal electro-deposit has branches having a size ranging from 0.01 $\mu$m to 1 $\mu$m.

8. The metal-supportingphotocatalyst of claim 7, wherein said dendriticstructureof said metal electro-deposit further includes a main body, from which said branches extend, said main body having a size ranging from 0.1 $\mu$m to 10 $\mu$m.

9. The metal-supporting photocatalystof claim 7, wherein said branches of said metal electro-deposit are made from one of a noble metal selected from the group consisting of gold (Au), silver (Ag), platinum (Pt), and palladium (Pd), and a transition metal selected from the group consisting of manganese (Mn), iron (Fe), cobalt (Co), nickel (Ni), copper (Cu) and zinc (Zn).

10. The metal-supportingphotocatalyst of claim 7, wherein each of said branches of said metal electro-deposit is made from an antibacterial metal selected from the group consisting of zinc (Zn), silver (Ag), and copper (Cu) .

11. The metal- supporting photocatalyst of claim 5, wherein saidnano-particles of saidphotocatalyst are made from a photo-catalytical compound selected from the group consisting of titanium dioxide and zinc oxide.

12. The metal-supporting photocatalyst of claim 5, wherein each of said nano-particles of said photocatalyst has a size ranging from 5 nm to 100 nm.

13. The metal-supporting photocatalyst of claim 11, wherein more than 50% of said nano-particles of said photocatalyst is made from anatase titanium dioxide.

14. The metal-supporting photocatalyst of claim 11, wherein more than 80% of said nano-particles of said photocatalyst is made from anatase titanium dioxide.

15. A method for preparing a metal-supporting photocatalyst, comprising:

> forming a metal deposit of a supporting metal; and
> forming nano-particles of a photocatalyst on the metal deposit.

16. The method of claim 15, wherein the metal deposit has a dendritic structure.

17. The method of claim 16, wherein formation of the metal deposit is conducted by electrolysis of a metal salt of the supporting metal.

18. The method of claim 17, wherein the supporting metal is selected from the group consisting of a noble metal selected from the group consisting of gold (Au), silver (Ag), platinum (Pt), and palladium (Pd), and a transition metal selected from the group consisting of manganese (Mn), iron (Fe), cobalt (Co), nickel (Ni), copper (Cu) and zinc (Zn).

19. The method of claim 18, wherein the metal salt is selected from the group consisting of nitrate, acetate, oxalate, carbonate, and sulfate of the supporting metal.

20. The method of claim 19, wherein the metal salt is silver nitrate.

21. The method of claim 17, wherein the electrolysis of the metal salt is conducted in an aqueous solution containing nitric acid and ammonia and having a pH value ranging from 2 to 4.

22. The method of claim 21, wherein the electrolysis of the metal salt is conducted at a metal salt concentration ranging from 1 wt% to 3 wt% based on the total weight of the aqueous solution.

FIG. 1(a)

● :photocatalyst

FIG. 1(b)

EP 1 859 850 A1

EP 1 859 850 A1

$1.27 m^2/g$     $1.03 m^2/g$     $0.31 m^2/g$

AgNO3（wt%）

pH

FIG. 2

FIG. 3(a)

FIG. 3(b)

FIG. 3(c)

FIG. 3(d)

FIG. 4

EP 1 859 850 A1

FIG. 5

**European Patent Office**

## EUROPEAN SEARCH REPORT

Application Number

EP 07 10 8604

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 4 544 470 A (HETRICK ROBERT E [US])<br>1 October 1985 (1985-10-01)<br>* abstract *<br><br>* column 3, line 37 - line 49 *<br>* column 3, line 60 - column 4, line 38 *<br>* column 5, line 5 - line 30 *<br>* figure 3 * | 1,5,15<br><br>9,11-14,<br>18 | INV.<br>B01D53/38<br>B01J21/06<br>B01J23/06<br>B01J23/38<br>B01J35/00<br>B01J37/02 |
| Y | | 1-14 | |
| X | WO 01/28714 A (DOW CHEMICAL CO [US]; TSOU YU MIN [US]; MANOR EDMOND L [US])<br>26 April 2001 (2001-04-26)<br>* page 4, line 16 - page 7, line 4 *<br>* examples 4-6 *<br>* claims 1,2,4 * | 1-22 | |
| X | EP 0 007 239 A2 (INCO EUROP LTD [GB])<br>23 January 1980 (1980-01-23)<br>* page 5, line 32 - page 8, line 31 *<br>* claims 1,4-7,13 * | 1-22 | |
| X | US 2003/098101 A1 (MIN BYOUNG-OK [KR])<br>29 May 2003 (2003-05-29)<br>* abstract *<br>* column 3, line 4 - line 22 *<br>* column 3, line 36 - line 37 *<br>* column 4, line 33 - line 50 *<br>* column 5, line 54 - line 59 *<br>* claims 1,3,4,10 *<br>* figure 5 * | 1,5 | TECHNICAL FIELDS SEARCHED (IPC)<br>B01D<br>B01J |
| Y | EP 0 911 078 A (HITACHI METALS LTD [JP]; TECHNOLOGY OF ART & ORIGINAL C [JP])<br>28 April 1999 (1999-04-28)<br>* paragraphs [0008], [0019], [0023], [0027], [0029] *<br>* figures 1,2 * | 1-14 | |

-/--

The present search report has been drawn up for all claims

| Place of search | Date of completion of the search | Examiner |
|---|---|---|
| Munich | 20 August 2007 | Gosselin, Daniel |

EPO FORM 1503 03.82 (P04C01)

**European Patent Office**

**EUROPEAN SEARCH REPORT**

Application Number

EP 07 10 8604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 555 065 A (ANDES ELECTRIC CO LTD [JP]) 20 July 2005 (2005-07-20) <br> * paragraphs [0006], [0013] - [0016] * <br> * figure 2 * <br> ----- | 1-14 | |
| A | GB 2 006 266 A (ANVAR) 2 May 1979 (1979-05-02) <br> * abstract * <br> * page 1, line 46 - line 52 * <br> * page 1, line 70 - line 75 * <br> * claims 1,3,4,8,13 * <br> ----- | 1-14 | |

TECHNICAL FIELDS
SEARCHED (IPC)

The present search report has been drawn up for all claims

| Place of search | Date of completion of the search | Examiner |
|---|---|---|
| Munich | 20 August 2007 | Gosselin, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 8604

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2007

| Patent document cited in search report | | Publication date | Patent family member(s) | | Publication date |
|---|---|---|---|---|---|
| US 4544470 | A | 01-10-1985 | CA | 1234777 A1 | 05-04-1988 |
| | | | DE | 3579258 D1 | 27-09-1990 |
| | | | EP | 0164184 A2 | 11-12-1985 |
| | | | JP | 61011152 A | 18-01-1986 |
| WO 0128714 | A | 26-04-2001 | AU | 1206301 A | 30-04-2001 |
| | | | BR | 0015062 A | 16-07-2002 |
| | | | CA | 2387563 A1 | 26-04-2001 |
| | | | CN | 1379703 A | 13-11-2002 |
| | | | DE | 60012363 D1 | 26-08-2004 |
| | | | DE | 60012363 T2 | 09-12-2004 |
| | | | EP | 1235658 A1 | 04-09-2002 |
| | | | JP | 2003512520 T | 02-04-2003 |
| EP 0007239 | A2 | 23-01-1980 | AU | 523857 B2 | 19-08-1982 |
| | | | AU | 4873379 A | 17-01-1980 |
| | | | DE | 2964533 D1 | 24-02-1983 |
| | | | EP | 0047566 A2 | 17-03-1982 |
| | | | FI | 792211 A | 15-01-1980 |
| | | | NO | 792299 A | 15-01-1980 |
| US 2003098101 | A1 | 29-05-2003 | BR | 0201301 A | 09-09-2003 |
| | | | CN | 1421892 A | 04-06-2003 |
| | | | JP | 3715586 B2 | 09-11-2005 |
| | | | JP | 2003157765 A | 30-05-2003 |
| | | | MX | PA02003391 A | 16-07-2004 |
| | | | RU | 2240629 C2 | 20-11-2004 |
| | | | SE | 525385 C2 | 08-02-2005 |
| | | | SE | 0201119 A | 24-05-2003 |
| EP 0911078 | A | 28-04-1999 | US | 6531100 B1 | 11-03-2003 |
| EP 1555065 | A | 20-07-2005 | AU | 2003264546 A1 | 08-04-2004 |
| | | | CN | 1681593 A | 12-10-2005 |
| | | | WO | 2004026471 A1 | 01-04-2004 |
| | | | JP | 2005261988 A | 29-09-2005 |
| | | | KR | 20050067150 A | 30-06-2005 |
| | | | US | 2006105911 A1 | 18-05-2006 |
| GB 2006266 | A | 02-05-1979 | BE | 870334 A1 | 08-03-1979 |
| | | | DE | 2839314 A1 | 22-03-1979 |
| | | | FR | 2402477 A2 | 06-04-1979 |
| | | | JP | 54052693 A | 25-04-1979 |
| | | | NL | 7809197 A | 13-03-1979 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5840111 A
- US 5776239 A
- US 5851507 A
- US 5672330 A
- US 6027766 A
- US 5879715 A
- US 5460701 A
- US 6387531 B
- US 6503475 B
- US 6368668 B
- US 6294246 B
- JP 2005120117 B
- TW 592824 B
- TW 574074 B
- TW 279175 B